(19) Europäisches Patentamt
European Patent Office
Office européen des brevets

(11) EP 3 428 474 A1

(12) EUROPEAN PATENT APPLICATION

(43) Date of publication:
16.01.2019 Bulletin 2019/03

(51) Int Cl.:
F16F 7/01 (2006.01)    F16F 9/46 (2006.01)

(21) Application number: 17001189.4

(22) Date of filing: 12.07.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicants:
• KYB Corporation
Tokyo 105-6111 (JP)
• Nagoya Institute Of Technology
Nagoya-shi, Aichi 466-8555 (JP)

(72) Inventors:
• Oota, Akihisa
Tokyo, 105-6111 (JP)
• Sekine, Shinichi
Tokyo, 105-6111 (JP)
• Toyouchi, Atsushi
Tokyo, 105-6111 (JP)
• Fukuzawa, Yuji
Nagano, 389-0688 (JP)
• IDO, Yasushi
Nagoya-shi, Aichi, 466-8555 (JP)
• Iwamoto, Yuhiro
Nagoya-shi, Aichi, 466-8555 (JP)

(74) Representative: Müller-Boré & Partner
Patentanwälte PartG mbB
Friedenheimer Brücke 21
80639 München (DE)

(54) DAMPER WITH POWER GENERATING FUNCTION

(57)     A damper with power generating function which can successfully generate damping force and successfully generate electric power is provided.

A damper 1 with power generating function includes a cylinder 10, a rod 50, magnetic particles 90, and a coil unit 20. The rod 50 which is reciprocally movable in an axial direction projects outside from the cylinder 10. The magnetic particles 90 have characteristics of a permanent magnet, and a plurality of magnetic particles 90 are filled in the cylinder 10. Directions of magnetic lines formed by the plurality of magnetic particles 90 are changed with reciprocal movement of the rod 50, so that the number of magnetic lines penetrating the coil unit 20 is changed, whereby induced electromotive force is generated in the coil unit 20.

Fig. 1

EP 3 428 474 A1

**Description**

TECHNICAL FIELD

The present invention relates to a damper with power generating function.

BACKGROUND ART

A damper described in Patent Literature 1 includes a cylinder, a piston movably inserted into the cylinder, and a rod movably inserted into the cylinder and coupled to the piston. This damper includes an extension side chamber and a compression side chamber disposed in the cylinder, a damping path and a pump path which cause the extension side chamber and the compression side chamber to communicate with each other in parallel, a resistor element which is disposed in the middle of the damping path to give resistance to a flow of fluid passing through the damping path, and a bidirectional discharging type pump disposed in the middle of the pump path. The pump of the damper is configured to be driven by a motor. In the damper, when the pump is driven by the motor, a fluid can be fed from the extension side chamber to the compression side chamber or from the compression side chamber to the extension side chamber. That is, the damper actively extends or contracts by itself and can adjust generating force (damping force).
Patent Literature 1 also discloses that the pump and the motor of the damper respectively function as a fluid motor and a power generator, and the power generator is driven by a flow of fluid passing through the pump path, whereby electric power can be generated.

CITATION LIST

PATENT LITERATURE

Patent Literature 1: Unexamined Patent Publication No. 2015-102100

SUMMARY OF INVENTION

TECHNICAL PROBLEMS

However, since a flow rate of the fluid flowing in the pump path is low in this damper, the pump and the motor are not easily rotated, so that electric energy generated by the motor which functions as the power generator is small. Therefore, this damper cannot successfully generate electric power.
The present invention has been made in consideration of the above conventional circumstances and has an object to be solved to provide a damper with power generating function which can successfully generate damping force and successfully generate electric power.

SOLUTIONS TO THE PROBLEMS

A damper with power generating function according to the present invention includes a case, a rod, magnetic particles, and a coil unit. The rod which is reciprocally movable in an axial direction or rotatable around an axis projects outside from the case. The magnetic particles have characteristics of a permanent magnet and a plurality of magnetic particles are filled in the case. With reciprocal movement or axial rotation of the rod, directions of magnetic lines formed by the plurality of magnetic particles are changed so that a number of the magnetic lines penetrating the coil unit is changed, whereby induced electromotive force is generated in the coil unit.
In this damper with power generating function, when the rod reciprocally moves in the axial direction or rotates around the axis, the magnetic particles filled in the case move in the case, whereby damping force is generated.
Furthermore, when the directions of the magnetic lines formed by the plurality of magnetic particles moving in the case are changed, the number of magnetic lines penetrating the coil unit is changed. As the result, induced electromotive force is generated in the coil unit. That is, this damper with power generating function generates electric power.
Thus, the damper with power generating function according to the present invention can successfully generate damping force and successfully generate electric power.
In the damper with power generating function according to the present invention, the magnetic particles may have elasticity. In this case, when the rod reciprocally moves in the axial direction or rotates around the axis, the plurality of magnetic particles filled in the case are elastically deformed. Frictional force between the magnetic particles or elastic repulsive force of the magnetic particles generated at this time allow the damper with power generating function to generate damping force. Since the magnetic particles have elasticity, the adjacent magnetic particles are elastically deformed, with the result that seizure between the magnetic particles is less likely to be caused. Accordingly, reciprocal movement or axial rotation of the rod is less likely to be hindered in this damper with power generating function.

In the damper with power generating function according to the present invention, the coil unit may be disposed in the rod. In this case, a position of the coil unit disposed in the rod can be reliably changed with respect to the magnetic particles in the case. As the result, the magnetic lines of the magnetic particles reliably pass through the coil unit. Accordingly, the number of magnetic lines penetrating the coil unit is easily changed in this damper with power generating function, with the result that much larger induced electromotive force is easily generated in the coil unit.

In the damper with power generating function according to the present invention, a permanent magnet may be disposed in the rod, and the coil unit may be disposed at the case. In this case, the directions of the magnetic particles can be aligned by the permanent magnet in the rod so that the directions of the magnetic lines of the magnetic particles are aligned. Accordingly, the number of magnetic lines penetrating the coil unit with the aligned directions is changed in this damper with power generating function, with the result that much larger induced electromotive force is easily generated in the coil unit disposed at the case.

The damper with power generating function according to the present invention may include a piston which is disposed in the case, coupled to the rod, and reciprocally moves together with the rod. In this case, the magnetic particles filled in the case can be caused to flow more actively by the piston in this damper with power generating function. Accordingly, the magnetic lines of the magnetic particles more actively pass through the coil unit in this damper with power generating function. As the result, the number of magnetic lines penetrating the coil unit is easily changed more actively in this damper with power generating function, so that much larger induced electromotive force is easily generated in the coil unit.

In the damper with power generating function according to the present invention, the permanent magnet may be disposed in the piston, and the coil unit may be disposed at the case. In this case, the directions of the magnetic particles can be aligned by the permanent magnet in the piston so that the directions of the magnetic lines of the magnetic particles filled in the case are aligned and furthermore, the magnetic particles filled in the case can be caused to flow more actively by the piston. Accordingly, the number of magnetic lines penetrating the coil unit with the aligned directions is easily changed more actively in this damper with power generating function, with the result that much larger induced electromotive force is easily generated in the coil unit disposed at the case.

In the damper with power generating function according to the present invention, the coil unit may be disposed in the piston. In this case, the position of the coil unit disposed in the piston can be reliably changed with respect to the magnetic particles in the case. As the result, the magnetic lines of the magnetic particles reliably pass through the coil unit. Accordingly, the number of magnetic lines penetrating the coil unit is easily changed in this damper with power generating function, with the result that much larger induced electromotive force is easily generated in the coil unit. Furthermore, the magnetic particles filled in the case can be caused to flow more actively by the piston in this damper with power generating function, with the result that much larger induced electromotive force is easily generated in the coil unit.

The damper with power generating function according to the present invention may include a rotor which is disposed in the case, coupled to the rod rotatable around the axis, and rotates in the case together with the rod. In this case, when the rod and the rotor rotate around the axis, the magnetic particles filled in the case flow in the rotational direction of the rod and the rotor. As the result, in this damper with power generating function, damping force can be generated in the direction opposite to the rotational direction of the rod and the rotor and furthermore, induced electromotive force can be generated in the coil unit.

BRIEF DESCRIPTION OF THE DRAWINGS

Fig. 1 is a sectional view showing a damper with power generating function according to a first embodiment.
Fig. 2 is a schematic diagram of magnetic particles filled in a case of the damper with power generating function according to the first embodiment.

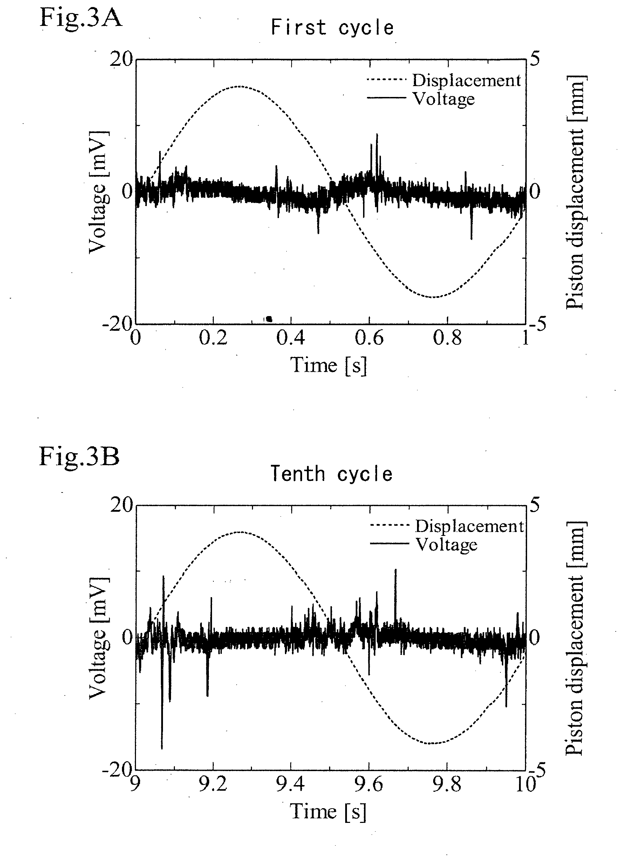

Figs. 3A and 3B are graphs showing changes in magnitude of induced electromotive force generated in the coil unit with respect to time when a speed (hereinafter to be referred to as a frequency) at which a rod and a piston of the damper with power generating function according to the first embodiment are reciprocally moved in the direction of the central axis of the case, is set to 1 Hz, in which Fig. 3A shows a change in magnitude of induced electromotive force with respect to time in a first cycle and Fig. 3B shows a change in magnitude of induced electromotive force with respect to time in a tenth cycle.
Figs. 4A and 4B are graphs showing changes in magnitude of induced electromotive force generated in the coil unit with respect to time when a frequency of the rod and the piston of the damper with power generating function according to the first embodiment is set to 5 Hz, in which Fig. 4A shows a change in magnitude of induced electromotive force with respect to time in a first cycle and Fig. 4B shows a change in magnitude of induced electromotive force with respect to time in a tenth cycle.

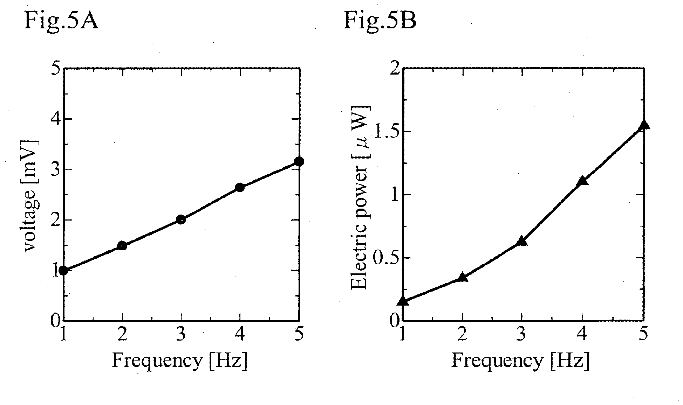

Figs. 5A and 5B are graphs showing magnitude of induced electromotive force generated in the coil unit and magnitude of electric power generated on the basis of the induced electromotive force when the frequency of the rod and the piston of the damper with power generating function according to the first embodiment is changed every 1 Hz in a range of 1 to 5 Hz, in which Fig. 5A shows magnitude of induced electromotive force generated in the coil unit with respect to the frequency and Fig. 5B shows magnitude of electric power generated on the basis of the induced electromotive force generated in the coil unit with respect to the frequency.

Fig. 6 is a sectional view showing a damper with power generating function according to a second embodiment.

Fig. 7 is a sectional view showing a damper with power generating function according to a third embodiment.

Fig. 8 is a sectional view showing a damper with power generating function according to a fourth embodiment.

Fig. 9 is a sectional view showing a damper with power generating function according to a fifth embodiment.

Figs. 10A and 10B are sectional views showing a damper according to a sixth embodiment, in which Fig. 10A is the sectional view in the direction of the central axis of a rotor and Fig. 10B is a sectional view along an A - A line in Fig. 10A.

Figs. 11A is a partially enlarged view showing a state of magnetic particles in contact with a surface on a side to which a piston moves in the damper with power generating function according to the first embodiment, and Fig. 11B is a partially enlarged view showing a state of magnetic particles in contact with a surface of the rod in the damper with power generating function which does not have a piston.

## DESCRIPTION OF EMBODIMENTS

Embodiments of a damper with power generating function according to the present invention will be described below with reference to the accompanying drawings.

## <First Embodiment>

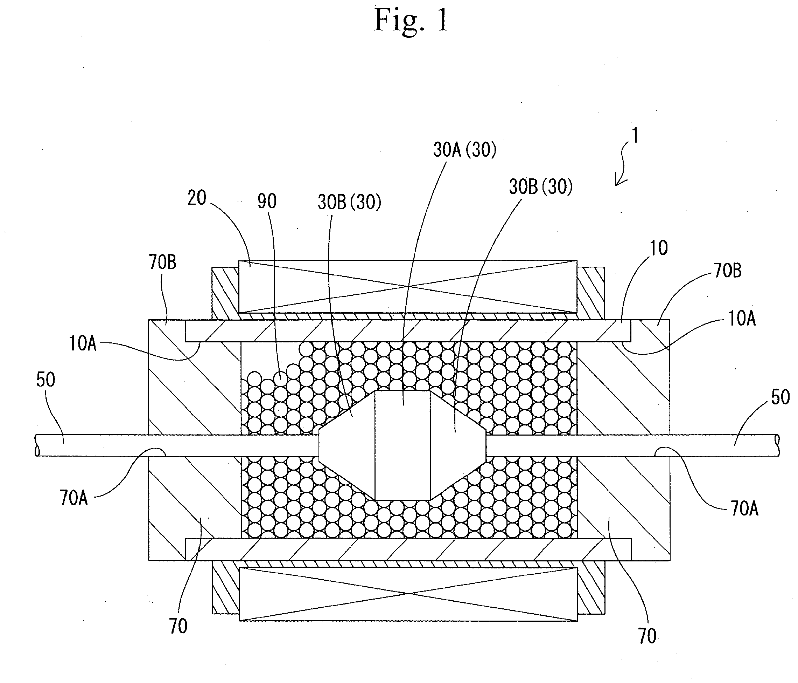

A damper 1 with power generating function according to a first embodiment, as shown in Fig. 1, includes a cylinder 10 serving as a case, a piston 30, a rod 50, one pair of rod guides 70, a plurality of magnetic particles 90, and a coil unit 20.

The cylinder 10 has a cylindrical shape having openings at both ends thereof. The piston 30 has a central part 30A and both end parts 30B. The central part 30A has a columnar shape. The both end parts 30B each have a truncated cone shape having an outer diameter gradually decreasing in a direction away from corresponding one end face of the central part 30A. A predetermined gap is formed between an outer peripheral surface of the piston 30 and an inner peripheral surface of the cylinder 10. The piston 30 is disposed in the cylinder 10.

The rod 50 has a columnar shape. The rod 50 is coupled to the distal ends of the both end parts 30B of the piston 30 and extends in both directions of the piston 30. The rod 50 extends in the direction of the central axis of the cylinder 10 and projects outside the cylinder 10 from opening ends 10A at both ends of the cylinder 10. That is, the piston 30 is coupled to the rod 50. The rod guides 70 are disk-like shapes each having an outer periphery formed with a flange part 70B and are coupled to the respective opening ends 10A at both ends of the cylinder 10 so as to close the opening ends 10A. The center of the disk-like shape of each rod guide 70 is formed with a through hole 70A penetrating through the rod guide in a thickness direction thereof. The inner diameter of the through hole 70A is slightly larger than the outer diameter of the rod 50. The through holes 70A penetrate in the direction of the central axis of the cylinder 10 in a state where the rod guides 70 are fixed to the respective opening ends 10A at both ends of the cylinder 10. The rod 50 is inserted into the through holes 70A of the rod guides 70 so as to be reciprocally movable. The rod 50 and the piston 30 are reciprocally movable in the cylinder 10 in the direction of the central axis of the cylinder 10. The cylinder 10, the piston 30, the rod 50, and the pair of rod guides 70 are nonmagnetic.

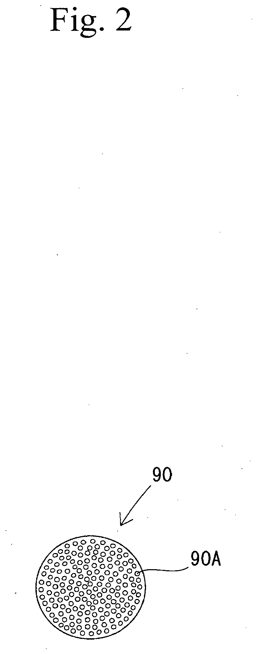

The plurality of magnetic particles 90 each have a spherical shape, as shown in Fig. 2. The magnetic particles 90 are elastic bodies made of silicone rubber which is elastomer having a durometer A hardness (hereinafter to be referred to as a hardness) of 60. The magnetic particles 90 contain neodymium (Nd) particles 90A. The quantity of the neodymium (Nd) particles 90A contained in the magnetic particles 90 is about 60 wt.% (17.78 vol.%). The neodymium (Nd) particles 90A have magnetism. That is, the magnetic particles 90 have magnetism and elasticity. The magnetic particles 90 thus formed are magnetized to have magnetic force. That is, the magnetic particles 90 have characteristics of a permanent magnet. The magnetic particles 90 are filled in a space surrounded by the cylinder 10 and the pair of rod guides 70 (that is, in the cylinder 10) at a packing ratio of 60%.

In this case, the packing ratio is expressed by the following equation (1). A filling volume is the volume of a space in which the magnetic particles 90 are filled.

[Mathematical Equation 1]

$$\text{Packing ratio} = \frac{\text{Mass of maginetic particles 90}}{\text{Filling volume} \times \text{Density of maginetic particles 90}} \quad \cdots (1)$$

The coil unit 20 is formed by coaxially winding a metal wire coated with an insulating film by a plurality of turns and bundling the metal wire into a cylindrical shape having a predetermined width in the radial direction, and an inner diameter thereof is slightly larger than the outer diameter of the cylinder 10. Both ends of the metal wire of the coil unit 20 are drawn out, so that current generated on the basis of induced electromotive force generated in the coil unit 20 is supplied to an electric appliance or the like provided outside of a damper 1 with power generating function (not shown). The cylinder 10 is inserted into the coil unit 20 so that the coil unit 20 is disposed on the outer peripheral surface of the cylinder 10 so that the cylindrical internal side of the coil unit 20 is along the outer peripheral surface of the cylinder 10.

In the damper 1 with power generating function formed as described above, when the piston 30 reciprocally moves in the direction of the central axis of the cylinder 10, the magnetic particles 90 move through a predetermined gap between the outer peripheral surface of the piston 30 and the inner peripheral surface of the cylinder 10. At this time, frictional force is generated between the inner peripheral surface of the cylinder 10 and the magnetic particles 90 in contact with the inner peripheral surface of the cylinder 10, between the adjacent magnetic particles 90, and between the outer peripheral surfaces of the rod 50 and the piston 30 and the magnetic particles 90 in contact with the outer peripheral surfaces of the rod 50 and the piston 30. Furthermore, the magnetic particles 90 located at the side to which the piston 30 moves are pushed and flattened by the piston 30. At this time, elastic repulsive force generated by the magnetic particles 90 pushed and flattened by the piston 30 pushes back the piston 30. That is, damping force is generated in the damper 1 with power generating function on the basis of the frictional force and the elastic repulsive force generated as described above.

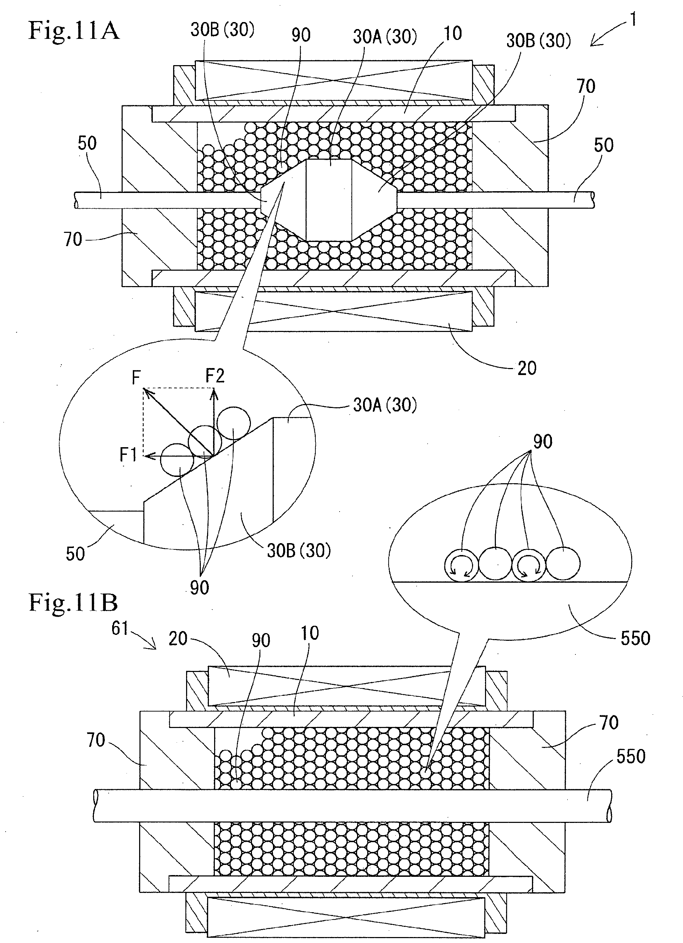

As shown in Fig. 11A, when the magnetic particles 90 located at the side to which the piston 30 moves are pushed and flattened by the piston 30, pressing force F is applied to the magnetic particles 90. The direction of the pressing force F is a direction vertical to inclined surfaces of the both end parts 30B. The pressing force F can be divided into a component force F1 in the direction of the central axis of the cylinder 10 and a component force F2 in a direction away from the central axis of the cylinder 10. The magnetic particles 90 pushed and flattened by the piston 30 are moved by the component force F2 in the direction away from the central axis of the cylinder 10.

In contrast to this, as in a damper 61 with power generating function shown in Fig. 11B in which no piston is provided, when a rod 550 moves in the direction of the central axis of the cylinder 10, the magnetic particles 90 in contact with the outer peripheral surface of the rod 550 is rolled or moved together with the rod 550 by frictional force generated between the magnetic particles 90 and the outer peripheral surface of the rod 550. That is, when no piston is provided, the magnetic particles 90 are not pushed and flattened by the rod 550 moving in the direction of the central axis of the cylinder 10. Accordingly, no pressing force is applied to the magnetic particles 90, and a flow rate of the magnetic particles 90 is lower as compared with the case where a piston is provided.

That is, the magnetic particles 90 filled in the cylinder 10 can be caused to flow more actively by providing the piston 30.

Furthermore, at this time, with the reciprocal movement of the rod 50 and the piston 30, directions of magnetic lines formed by the plurality of magnetic particles 90 are changed so that the number of magnetic lines formed by the plurality of magnetic particles 90 penetrating the coil unit 20 is changed, whereby induced electromotive force is generated in the coil unit 20. That is, the damper 1 with power generating function generates electric power at the coil unit 20.

Next, Figs. 3A and 3B show the graphs showing changes in magnitude of induced electromotive force generated in the coil unit 20 with respect to time when the frequency of the rod 50 and the piston 30 of the damper 1 with power generating function is set to 1 Hz. More specifically, Fig. 3A shows a change in magnitude of induced electromotive force in a first cycle with respect to time, and Fig. 3B shows a change in magnitude of induced electromotive force in a tenth cycle with respect to time.

As shown in Figs. 3A and 3B, in all regions in which the rod 50 and the piston 30 move in the direction of the central axis of the cylinder 10, induced electromotive force is generated. Waveforms of the induced electromotive force generated in the first cycle and the tenth cycle are different from each other. It is considered that this is because the directions of the magnetic lines of the plurality of magnetic particles 90 are changed every time the rod 50 and the piston 30 reciprocally move repeatedly in the direction of the central axis of the cylinder 10, so that the number of magnetic lines penetrating the coil unit 20 changes in different ways.

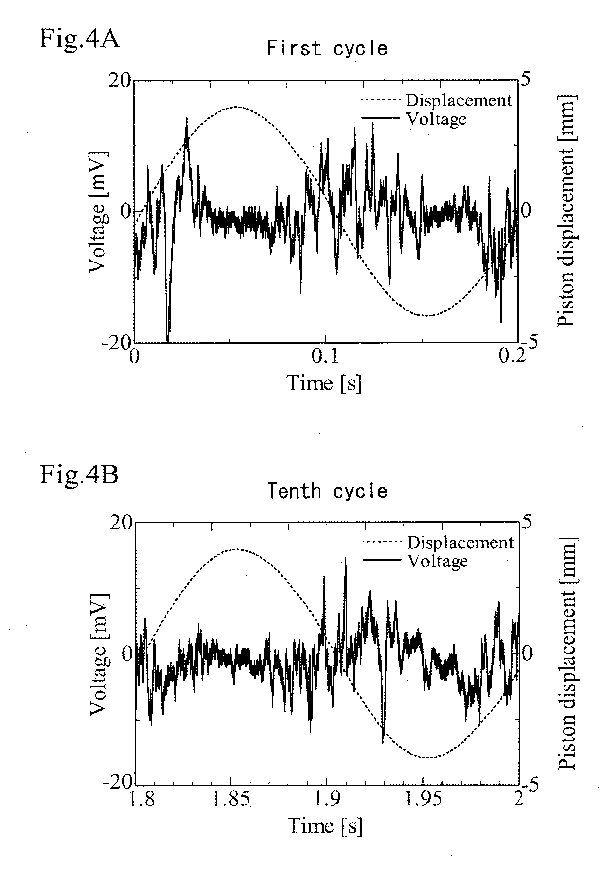

Next, Figs. 4A and 4B show the graphs showing changes in magnitude of induced electromotive force generated in the coil unit 20 with respect to time when the frequency of the rod 50 and the piston 30 of the damper 1 with power generating function is set to 5 Hz. More specifically, Fig. 4A shows a change in magnitude of induced electromotive force with respect to time in a first cycle, and Fig. 4B shows a change in magnitude of induced electromotive force with respect to time in a tenth cycle.

As shown in Figs. 4A and 4B, in all regions in which the rod 50 and the piston 30 move in the direction of the central axis of the cylinder 10, induced electromotive force is generated. The magnitude of induced electromotive force is larger as compared with the case where the frequency of the rod 50 and the piston 30 is 1Hz. It is considered that this is because the magnetic particles 90 filled in the cylinder 10 flow more actively as compared with the case where the frequency is 1 Hz, and the number of magnetic lines penetrating the coil unit 20 is changed more actively. Waveforms of the induced electromotive force generated in the first cycle and the tenth cycle are different from each other. It is considered that this is because the directions of the magnetic lines of the plurality of magnetic particles 90 are changed every time the rod 50 and the piston 30 reciprocally move repeatedly in the direction of the central axis of the cylinder 10, so that the number of magnetic lines penetrating the coil unit 20 changes in different ways.

Next, Figs. 5A and 5B show magnitudes of induced electromotive force generated in the coil unit 20 and magnitude of electric power generated on the basis of the induced electromotive force when the frequency of the rod 50 and the piston 30 of the damper 1 with power generating function is changed every 1 Hz in a range of 1 to 5 Hz. More specifically, Fig. 5A shows magnitude of an average value of induced electromotive force generated in the coil unit 20 when the rod 50 and the piston 30 are reciprocally moved a predetermined number of times, and Fig. 5B shows magnitude of electric power generated on the basis of the induced electromotive force generated in the coil unit 20. More specifically, the value is obtained by dividing a value obtained by squaring the average value of induced electromotive force at the respective frequencies in Fig. 5A by a resistance value (about $6.5\Omega$ (ohm)) of the coil unit 20.

As shown in Figs. 5A and 5B, the induced electromotive force generated in the coil unit 20 and the magnitude of electric power generated on the basis of the induced electromotive force generated in the coil unit 20 increase as the frequency of the rod 50 and the piston 30 increases. It is considered this is because when the frequency of the rod 50 and the piston 30 increases, the magnetic particles 90 filled in the cylinder 10 flow more actively, so that the number of magnetic lines penetrating the coil unit 20 is changed more actively.

As described above, in the damper 1 with power generating function, when the rod 50 and the piston 30 reciprocally move in the direction of the central axis of the cylinder 10, the magnetic particles 90 filled in the cylinder 10 move in the cylinder 10, whereby damping force is generated.

Furthermore, when the directions of the magnetic lines formed by the plurality of magnetic particles 90 moving in the cylinder 10 are changed, the number of magnetic lines penetrating the coil unit 20 is changed. As the result, induced electromotive force is generated in the coil unit 20. That is, the damper 1 with power generating function generates electric power.

Thus, the damper 1 with power generating function according to the present invention can successfully generate damping force and successfully generate electric power.

Furthermore, the magnetic particles 90 of the damper 1 with power generating function have elasticity. Accordingly, when the rod 50 reciprocally moves in the axial direction or rotates around the axis, the plurality of magnetic particles 90 filled in the cylinder 10 are elastically deformed. Frictional force between the magnetic particles 90 or elastic repulsive force of the magnetic particles 90 generated at this time allow the damper 1 with power generating function to generate damping force. Since the magnetic particles 90 have elasticity, the adjacent magnetic particles 90 are elastically deformed, with the result that seizure between the magnetic particles 90 is less likely to be caused. Accordingly, reciprocal movement or axial rotation of the rod 50 is less likely to be hindered in the damper 1 with power generating function.

Furthermore, the damper 1 with power generating function includes a piston 30 which is disposed in the cylinder 10, coupled to the rod 50, and reciprocally moves together with the rod 50. As the result, the magnetic particles 90 filled in the cylinder 10 can be caused to flow more actively by the piston 30 in the damper 1 with power generating function. Accordingly, the magnetic lines of the magnetic particles 90 more actively pass through the coil unit 20 in the damper 1 with power generating function. As the result, the number of magnetic lines penetrating the coil unit 20 is easily changed more actively, and much larger induced electromotive force is easily generated in the coil unit 20.

<Second Embodiment>

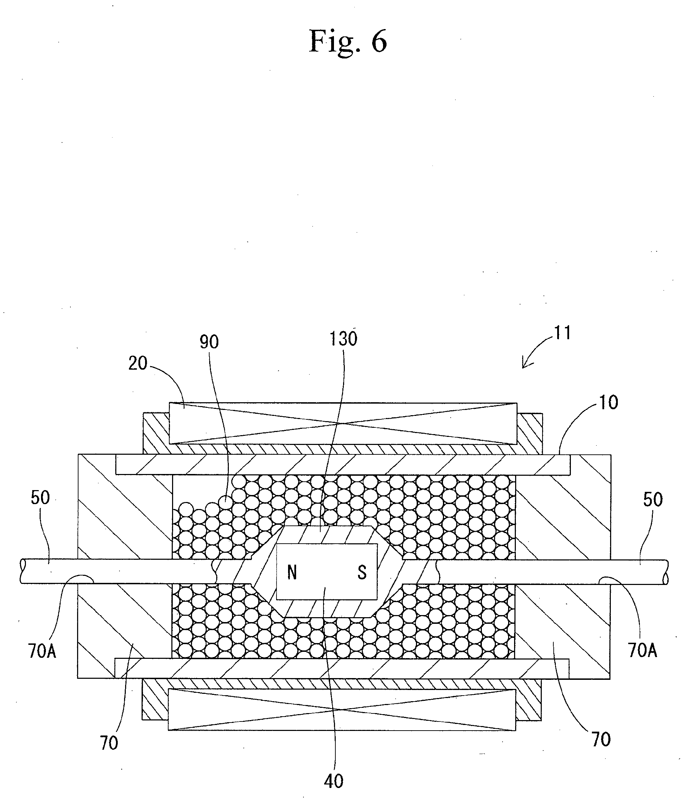

A damper 11 with power generating function according to a second embodiment, as shown in Fig. 6, is different from that in the first embodiment in that a magnet 40 serving as a permanent magnet is provided in a piston 130. Other components are same as those in the first embodiment. The same components are denoted by the same reference symbols, respectively, and a detailed description thereof will be omitted.

In the damper 11 with power generating function according to the second embodiment, as shown in Fig. 6, the magnet 40 is provided in the piston 130. The magnet 40 has characteristics of a permanent magnet is formed in a columnar shape, for example, and is disposed in the piston 130 to have a central axis coaxial with the central axes of the rod 50 and the piston 130. The magnet 40 is magnetized so that, for example, one end side of the columnar shape has a north pole and the other end side has a south pole.

In the damper 11 with power generating function formed as described above, when the piston 130 reciprocally moves in the direction of the central axis of the cylinder 10, the magnetic particles 90 move through a predetermined gap between the outer peripheral surface of the piston 130 and the inner peripheral surface of the cylinder 10. At this time, frictional force is generated between the inner peripheral surface of the cylinder 10 and the magnetic particles 90 in contact with the inner peripheral surface of the cylinder 10, between the adjacent magnetic particles 90, and between the outer peripheral surfaces of the rod 50 and the piston 130 and the magnetic particles 90 in contact with the outer peripheral surfaces of the rod 50 and the piston 130. The magnetic particles 90 located at the side to which the piston 130 moves are pushed and flattened by the piston 130. At this time, elastic repulsive force generated by the magnetic particles 90 pushed and flattened by the piston 130 pushes back the piston 130. That is, damping force is generated in the damper 11 with power generating function on the basis of the frictional force and the elastic repulsive force generated as described above.

Furthermore, at this time, with the reciprocal movement of the rod 50 and the piston 130, directions of magnetic lines formed by the plurality of magnetic particles 90 are changed so that the number of magnetic lines formed by the plurality of magnetic particles 90 penetrating the coil unit 20 is changed, whereby induced electromotive force is generated in the coil unit 20. That is, the damper 11 with power generating function generates electric power at the coil unit 20.

As described above, in the damper 11 with power generating function, when the rod 50 and the piston 130 reciprocally move in the direction of the central axis of the cylinder 10, the magnetic particles 90 filled in the cylinder 10 move in the cylinder 1, whereby damping force is generated.

Furthermore, when the directions of the magnetic lines formed by the plurality of magnetic particles 90 moving in the cylinder 10 are changed, the number of magnetic lines penetrating the coil unit 20 is changed. As the result, induced electromotive force is generated in the coil unit 20. That is, the damper 11 with power generating function generates electric power.

Thus, the damper 11 with power generating function according to the present invention can also successfully generate damping force and successfully generate electric power.

Furthermore, in the damper 11 with power generating function, the magnet 40 is disposed in the piston 130, and the coil unit 20 is disposed at the cylinder 10. As the result, in the damper 11 with power generating function, the directions of the magnetic particles 90 can be aligned by the magnet 40 in the piston 130 so that the directions of the magnetic lines of the magnetic particles 90 filled in the cylinder 10 are aligned, and furthermore, the magnetic particles 90 filled in the cylinder 10 can be caused to flow more actively by the piston 130. Accordingly, the number of magnetic lines penetrating the coil unit 20 with the aligned directions is easily changed more actively in the damper 11 with power generating function, with the result that much larger induced electromotive force is easily generated in the coil unit 20 disposed at the cylinder 10.

<Third Embodiment>

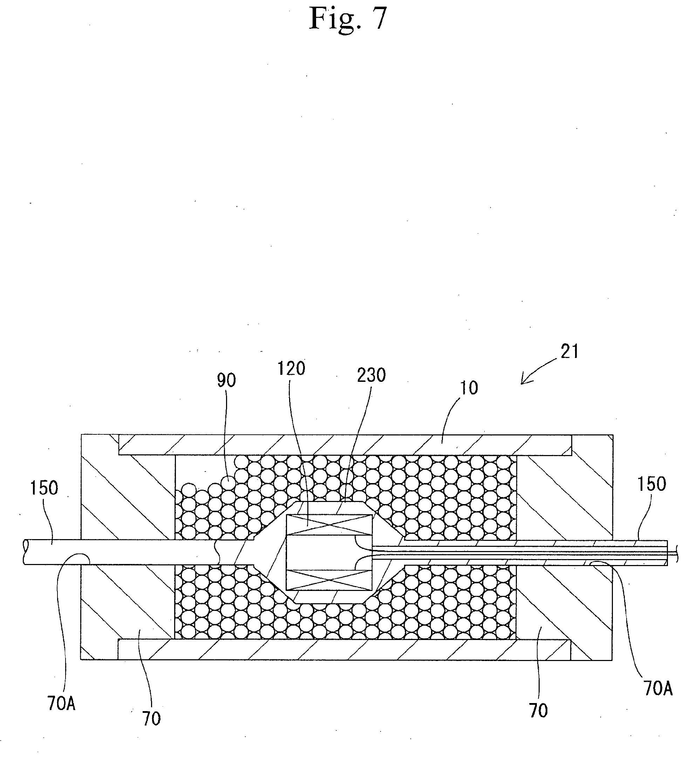

A damper 21 with power generating function according to a third embodiment, as shown in Fig. 7, is different from those in the first and second embodiments in that a coil unit 120 is provided in the piston 230. Other components are same as those in the first and second embodiments. The same components are denoted by the same reference symbols, respectively, and a detailed description thereof will be omitted.

In the damper 21 with power generating function according to the third embodiment, the coil unit 120 is provided in the piston 230. More specifically, as shown in Fig. 7, the coil unit 120 is disposed in the piston 230 so that the central axis of the coil unit 120 having a cylindrical shape is coaxial with the central axes of the rod 150 and the piston 230. Both ends of the metal wire drawn out from the coil unit 120 are drawn to the outside of the damper 21 with power generating function through an inside of one side of the rod 150, and current generated on the basis of induced electromotive force generated in the coil unit 120 is supplied to an electric appliance or the like disposed outside of the damper 21 with power generating function (not shown).

In the damper 21 with power generating function formed as described above, when the piston 230 reciprocally moves in the direction of the central axis of the cylinder 10, the magnetic particles 90 move through a predetermined gap between the outer peripheral surface of the piston 230 and the inner peripheral surface of the cylinder 10. At this time, frictional force is generated between the inner peripheral surface of the cylinder 10 and the magnetic particles 90 in contact with the inner peripheral surface of the cylinder 10, between the adjacent magnetic particles 90, and between the outer peripheral surfaces of the rod 150 and the piston 230 and the magnetic particles 90 in contact with the outer peripheral surfaces of the rod 150 and the piston 230. The magnetic particles 90 located at the side to which the piston 230 moves are pushed and flattened by the piston 230. At this time, elastic repulsive force generated by the magnetic particles 90 pushed and flattened by the piston 230 pushes back the piston 230. That is, damping force is generated in the damper 21 with power generating function on the basis of the frictional force and the elastic repulsive force generated as described above.

Furthermore, at this time, with the reciprocal movement of the rod 150 and the piston 230, directions of magnetic lines formed by the plurality of magnetic particles 90 are changed so that the number of magnetic lines formed by the plurality of magnetic particles 90 penetrating the coil unit 120 is changed, whereby induced electromotive force is generated in the coil unit 120. That is, the damper 21 with power generating function generates electric power at the coil unit 120.

As described above, in the damper 21 with power generating function, when the rod 150 and the piston 230 reciprocally move in the direction of the central axis of the cylinder 10, the magnetic particles 90 filled in the cylinder 10 move in the cylinder 10, whereby damping force is generated.

Furthermore, when the directions of the magnetic lines formed by the plurality of magnetic particles 90 moving in the cylinder 10 are changed, the number of magnetic lines penetrating the coil unit 120 is changed. As the result, induced electromotive force is generated in the coil unit 120. That is, the damper 21 with power generating function generates electric power.

Thus, the damper 21 with power generating function according to the present invention can also successfully generate damping force and successfully generate electric power.

In the damper 21 with power generating function, the coil unit 120 is disposed in the piston 230. Accordingly, the position of the coil unit 120 disposed in the piston 230 can be reliably changed with respect to the magnetic particles 90 in the cylinder 10. As the result, the magnetic lines of the magnetic particles 90 reliably pass through the coil unit 120. Accordingly, the number of magnetic lines penetrating the coil unit 120 is easily changed in the damper 21 with power generating function, and much larger induced electromotive force is easily generated in the coil unit 120. Furthermore, the magnetic particles 90 filled in the cylinder 10 can be caused to flow more actively by the piston 230 in this damper 21 with power generating function, with the result that much larger induced electromotive force is easily generated in the coil unit 120.

<Fourth Embodiment>

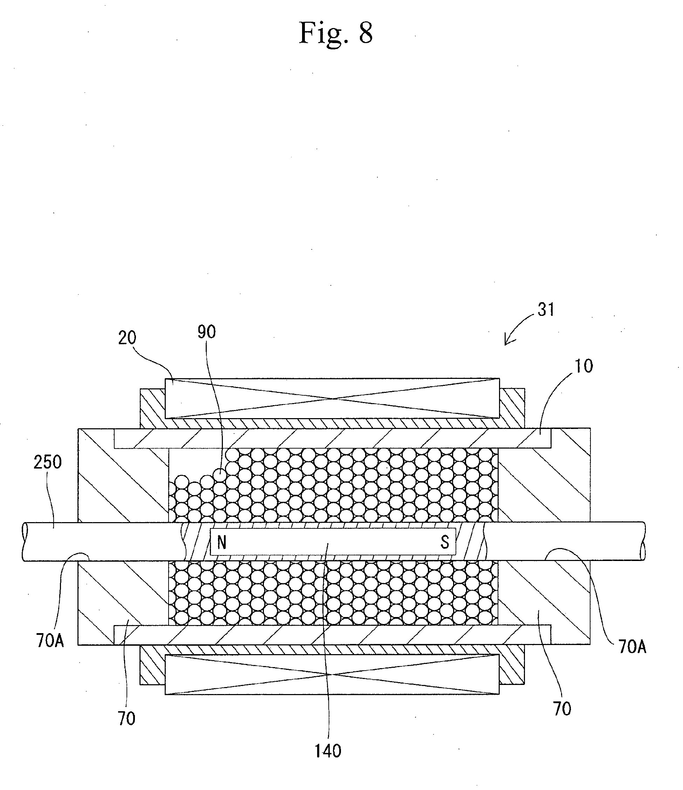

A damper 31 with power generating function according to a fourth embodiment, as shown in Fig. 8, is different from those in the first to third embodiments in that no piston is provided and a magnet 140 serving as a permanent magnet is provided in a rod 250. Other components are same as those in the first to third embodiments. The same components are denoted by the same reference symbols, respectively, and a detailed description thereof will be omitted.

In the damper 31 with power generating function according to the fourth embodiment, as shown in Fig. 8, the magnet 140 is disposed in the rod 250. The magnet 140 has characteristics of a permanent magnet is formed in a columnar shape, for example, and is disposed in the rod 250 to have a central axis coaxial with the central axis of the rod 250. The magnet 140 is magnetized so that, for example, one end side of the columnar shape has a north pole and the other end side has a south pole.

In the damper 31 with power generating function formed as described above, when the rod 250 reciprocally moves in the direction of the central axis of the cylinder 10, the magnetic particles 90 move through a predetermined gap between the outer peripheral surface of the rod 250 and the inner peripheral surface of the cylinder 10. More specifically, the magnetic particles 90 in contact with the outer peripheral surface of the rod 250 move together with the rod 250 by frictional force generated between the magnetic particles 90 and the outer peripheral surface of the rod 250. At this time, frictional force is also generated between the inner peripheral surface of the cylinder 10 and the magnetic particles 90 in contact with the inner peripheral surface of the cylinder 10 and between the adjacent magnetic particles 90. That is, damping force is generated in the damper 31 with power generating function on the basis of the frictional force generated as described above.

Furthermore, at this time, with the reciprocal movement of the rod 250, directions of magnetic lines formed by the plurality of magnetic particles 90 are changed so that the number of magnetic lines formed by the plurality of magnetic particles 90 penetrating the coil unit 20 is changed, whereby induced electromotive force is generated in the coil unit 20. That is, the damper 31 with power generating function generates electric power at the coil unit 20.

As described above, in the damper 31 with power generating function, when the rod 250 reciprocally moves in the direction of the central axis of the cylinder 10, the magnetic particles 90 filled in the cylinder 10 move in the cylinder 10, whereby damping force is generated.

Furthermore, when the directions of the magnetic lines formed by the plurality of magnetic particles 90 moving in the cylinder 10 are changed, the number of magnetic lines penetrating the coil unit 20 is changed. As the result, induced electromotive force is generated in the coil unit 20. That is, the damper 31 with power generating function generates electric power.

Thus, the damper 31 with power generating function according to the present invention can also successfully generate damping force and successfully generate electric power.

Furthermore, in the damper 31 with power generating function, the magnet 140 is disposed in the rod 250, and the coil unit 20 is disposed at the cylinder 10. Accordingly, the directions of the magnetic particles 90 can be aligned by the magnet 140 in the rod 250 so that the directions of the magnetic lines of the magnetic particles 90 are aligned. Accordingly, the number of magnetic lines the penetrating the coil unit 20 with the aligned directions is changed in the damper 31 with power generating function, with the result that much larger induced electromotive force is easily generated in the coil unit 20 disposed at the cylinder 10.

<Fifth Embodiment>

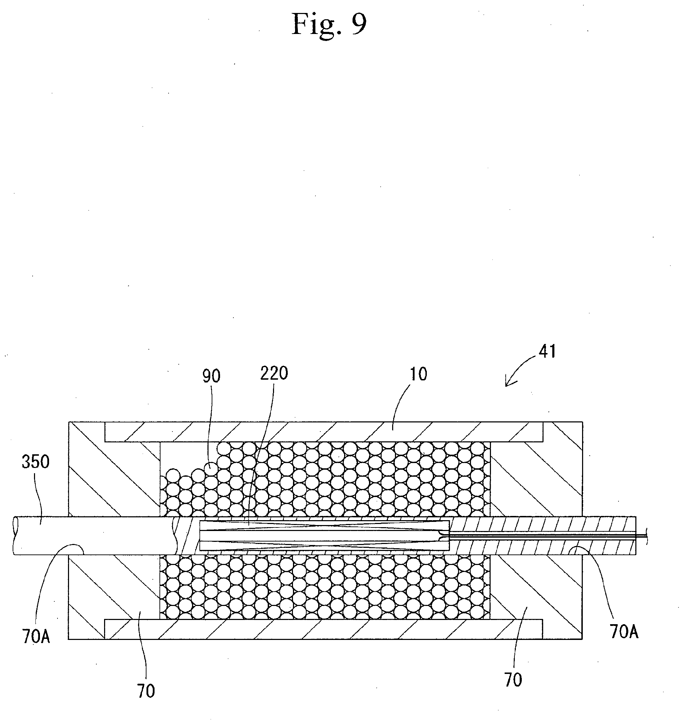

A damper 41 with power generating function according to a fifth embodiment, as shown in Fig. 9, is different from those in the first to fourth embodiments in that no piston is provided and a coil unit 220 is provided in a rod 350. Other components are same as those in the first to fourth embodiments. The same components are denoted by the same reference symbols, respectively, and a detailed description thereof will be omitted.

In the damper 41 with power generating function according to the fifth embodiment, the coil unit 220 is provided in the rod 350. More specifically, as shown in Fig. 9, the coil unit 220 is disposed in the rod 350 so that the central axis of the coil unit 220 having a cylindrical shape is coaxial with the central axis of the rod 350. Both ends of the metal wire drawn out from the coil unit 220 are drawn to the outside of the damper 41 with power generating function through an inside of one side of the rod 350, and current generated on the basis of induced electromotive force generated in the coil unit 220 is supplied to an electric appliance or the like disposed outside of the damper 41 with power generating function (not shown).

In the damper 41 with power generating function formed as described above, when the rod 350 reciprocally moves in the direction of the central axis of the cylinder 10, the magnetic particles 90 move through a predetermined gap between the outer peripheral surface of the rod 350 and the inner peripheral surface of the cylinder 10. More specifically, the magnetic particles 90 in contact with the outer peripheral surface of the rod 350 move together with the rod 350 by frictional force generated between the magnetic particles 90 and the outer peripheral surface of the rod 350. At this time, frictional force is also generated between the inner peripheral surface of the cylinder 10 and the magnetic particles 90 in contact with the inner peripheral surface of the cylinder 10 and between the adjacent magnetic particles 90. That is, damping force is generated in the damper 41 with power generating function on the basis of the frictional force generated as described above.

Furthermore, at this time, with the reciprocal movement of the rod 350, directions of magnetic lines formed by the plurality of magnetic particles 90 are changed so that the number of magnetic lines formed by the plurality of magnetic particles 90 penetrating the coil unit 220 is changed, whereby induced electromotive force is generated in the coil unit 220. That is, the damper 41 with power generating function generates electric power at the coil unit 220.

As described above, in the damper 41 with power generating function, when the rod 350 reciprocally moves in the direction of the central axis of the cylinder 10, the magnetic particles 90 filled in the cylinder 10 move in the cylinder 10, whereby damping force is generated.

Furthermore, when the directions of the magnetic lines formed by the plurality of magnetic particles 90 moving in the cylinder 10 are changed, the number of magnetic lines penetrating the coil unit 220 is changed. As the result, induced electromotive force is generated in the coil unit 220. That is, the damper 41 with power generating function generates electric power.

Thus, the damper 41 with power generating function according to the present invention can also successfully generate damping force and successfully generate electric power.

Furthermore, in the damper 41 with power generating function, the coil unit 220 is disposed in the rod 350. Accordingly, the position of the coil unit 220 disposed in the rod 350 can be reliably changed with respect to the magnetic particles 90 in the cylinder 10. As the result, the magnetic lines of the magnetic particles 90 reliably pass through the coil unit 220. Accordingly, the number of magnetic lines penetrating the coil unit 220 is easily changed in the damper 41 with power generating function, with the result that much larger induced electromotive force is easily generated in the coil unit 220.

<Sixth Embodiment>

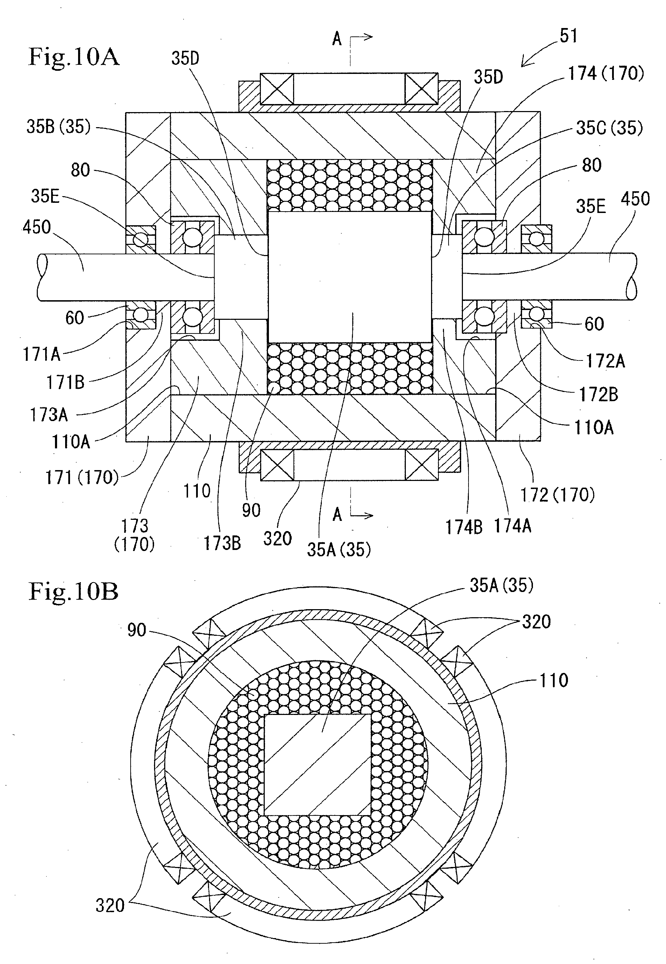

A damper 51 with power generating function according to a sixth embodiment, as shown in Figs. 10A and 10B, is different from those in the first to fifth embodiments in the shape of a cylinder 110, the shape of a rod guide 170, rotation of a rod 450 and a rotor 35 around the central axis of the cylinder 110, the shape of a coil unit 320, the disposition of the coil unit 320 with respect to the cylinder 110, and the like. Other components are same as those in the first to fifth embodiments. The same components are denoted by the same reference symbols, respectively, and a detailed description thereof will be omitted.

The cylinder 110, as shown in Figs. 10A and 10B, has a cylindrical shape having openings at both ends thereof.

A first rod guide 171 serving as the rod guide 170 has a disk-like shape, and is coupled to the cylinder 110 so that the other surface of the first rod guide 171 abuts against one end face of the cylinder 110 to close one side of the cylinder 110. The center of the disk-like shape of the first rod guide 171 is formed with a first through hole 171A penetrating through the first rod guide 171 in a thickness direction thereof. The first through hole 171A on the other surface side of the first rod guide 171 is formed with a first stopper 171B which extends inward from the inner peripheral surface of the first through hole 171A in a flat plate shape. The inner diameter of the first stopper 171 B is slightly larger than the outer diameter of the rod 450 (which will be described later). A shield bearing 60 is fitted in the first through hole 171A, and one surface of the shield bearing 60 abuts against one surface of the first stopper 171B.

A second rod guide 172 serving as the rod guide 170 has a disk-like shape, and is coupled to the cylinder 110 so that one surface of the second rod guide 172 abuts against the other end face of the cylinder 110 so as to close the other side of the cylinder 110. The center of the disk-like shape of the second rod guide 172 is formed with a second through hole 172A penetrating through the second rod guide 172 in a thickness direction of thereof. An intermediate part of the second through hole 172A penetrating the rod guide in the thickness direction is formed with a second stopper 172B which extends inward from the inner peripheral surface of the second through hole 172A in a flat plate shape. The inner diameter of the second stopper 172B is slightly larger than the outer diameter of the rod 450. The inner diameter of the second through hole 172A in an area between one surface of the second stopper 172B and one surface of the second rod guide 172 (hereinafter to be referred to as one side of the second through hole 172A) is larger than that in an area between the other surface of the second stopper 172B and the other surface of the second rod guide 172 (hereinafter to be referred to as the other side of the second through hole 172A). The shield bearing 60 is fitted in the other side of the second through hole 172A, and one surface of the shield bearing 60 abuts against the other surface of the second stopper 172B.

A third rod guide 173 serving as the rod guide 170 has a disk-like shape thicker than each of the first rod guide 171 and the second rod guide 172. The third rod guide 173 has a disk-like shape having an outer diameter almost equal to the inner diameter of the cylinder 110. The third rod guide 173 is fitted in one opening end 110A of the cylinder 110 and coupled to the first rod guide 171 with one surface of the disk-like shape thereof abutting against the other surface of the first rod guide 171. The center of the disk-like shape of the third rod guide 173 is formed with a third through hole 173A penetrating through the third rod guide 173 in a thickness direction thereof. The third through hole 173A on the other surface side of the third rod guide 173 is formed with a third stopper 173B which extends inward from the inner peripheral surface of the third through hole 173A in a flat plate shape. The inner diameter of the third stopper 173B is slightly larger than the outer diameter of a first end 35B of the rotor 35 (which will be described later).

A fourth rod guide 174 serving as the rod guide 170 has a disk-like shape thicker than each of the first rod guide 171 and the second rod guide 172 and thinner than the third rod guide 173. The fourth rod guide 174 has a disk-like shape having an outer diameter almost equal to the inner diameter of the cylinder 110. The fourth rod guide 174 is fitted in the other opening end 110A of the cylinder 110 and coupled to the second rod guide 172 with the other surface of the disk-like shape thereof abutting against one surface of the second rod guide 172. The center of the disk-like shape of the fourth rod guide 174 is formed with a fourth through hole 174A penetrating through the fourth rod guide 174 in a thickness direction thereof. The fourth through hole 174A on one surface side of the fourth rod guide 174 is formed with a fourth stopper 174B which extends inward from the inner peripheral surface of the fourth through hole 174A in a flat plate shape. The inner diameter of the fourth stopper 174B is slightly larger than the outer diameter of a second end 35C of the rotor 35.

The rotor 35 has a central part 35A, the first end 35B, and the second end 35C. The central part 35A is disposed between the other surface of the third rod guide 173 and one surface of the fourth rod guide 174, and has a cross-sectional shape orthogonal to the central axis of the cylinder 110 which is a square shape (see Fig. 10B). Ridges (hereinafter to be referred to ridges) are formed between two adjacent surfaces of the four surfaces forming the square shape.

Both ends of the central part 35A in the direction of the central axis of the cylinder 110 are each formed with a first plane 35D orthogonal to the central axis of the cylinder 110.

The first end 35B and the second end 35C have columnar shapes and extend from the centers of the two first planes 35D of a central part 35A respectively in opposite directions. The first end 35B and the second end 35C have respective sides away from the central part 35A which sides are each formed with a second plane 35E orthogonal to the central axis of the cylinder 110.

The rod 450 extends from the centers of the second planes 35E of the first end 35B and the second end 35C. That is, the rotor 35 is coupled to the rod 450. The rod 450 is coaxial with the first end 35B and the second end 35C. The rotor 35 is disposed in the cylinder 110.

The rod 450 is rotatably coupled to the first rod guide 171 and the second rod guide 172 via the shield bearings 60 fitted in the first rod guide 171 and the second rod guide 172 respectively.. The first end 35B and the second end 35C are rotatably inserted into the third stopper 173B of the third through hole 173A of the third rod guide 173 and the fourth stopper 174B of the fourth through hole 174A of the fourth rod guide 174, respectively.

A thrust bearing 80 is disposed inside the third through hole 173A of the third rod guide 173 and is sandwiched by the second plane 35E of the first end 35B inserted into the third stopper 173B and the other surface of the first rod guide 171. The thrust bearing 80 is also disposed inside the fourth through hole 174A of the fourth rod guide 174 and is sandwiched by the second plane 35E of the second end 35C inserted into the fourth stopper 174B and one surface of the second rod guide 172. In this manner, the rod 450 and the rotor 35 both are rotatable around the central axis of the cylinder 110.

The coil unit 320 is formed by coaxially winding a metal wire coated with an insulating film by a plurality of turns and bundling the metal wire into an annular shape having a predetermined width in the radial direction. In the damper 51 with power generating function, four coil units 320 are disposed on the outer peripheral surface of the cylinder 110 so that respective one end sides of the annular shapes are arranged along the outer peripheral surface of the cylinder 110.

In the damper 51 with power generating function formed as described above, the magnetic particles 90 filled in the cylinder 110 flow when the rod 450 and the rotor 35 rotate around the central axis of the cylinder 110. At this time, frictional force is generated between the inner peripheral surface of the cylinder 110 and the magnetic particles 90 in contact with the inner peripheral surface of the cylinder 110, between the adjacent magnetic particles 90, and between the surface of a central part 35A of the rotor 35 and the magnetic particles 90 in contact with the surface of the central part 35A of the rotating rotor 35. The magnetic particles 90 are pushed and flattened by the central part 35A of the rotating rotor 35. At this time, elastic repulsive force generated by the magnetic particles 90 pushed and flattened by the central part 35A of the rotor 35 pushes back the central part 35A of the rotor 35. That is, damping force is generated in the direction opposite to the rotational direction of the rotor 35 in the damper 51 with power generating function on the basis of the frictional force and the elastic repulsive force generated as described above.

Furthermore, at this time, with the rotation of the rod 450 and the rotor 35, directions of magnetic lines formed by the plurality of magnetic particles 90 are changed so that the number of magnetic lines formed by the plurality of magnetic particles 90 penetrating the four coil units 320 is changed, whereby induced electromotive force is generated in the coil units 320. That is, the damper 51 with power generating function generates electric power at the four coil units 320.

As described above, in the damper 51 with power generating function, when the rod 450 and the rotor 35 rotate around the central axis of the cylinder 110, the magnetic particles 90 filled in the cylinder 110 move in the cylinder 110, whereby damping force is generated.

Furthermore, when the directions of the magnetic lines formed by the plurality of magnetic particles 90 moving in the cylinder 110 are changed, the number of magnetic lines penetrating the four coil units 320 is changed. As the result, induced electromotive force is generated in the coil unit 320. That is, the damper 51 with power generating function generates electric power.

Thus, the damper 51 with power generating function according to the present invention can also successfully generate damping force and successfully generate electric power.

Furthermore, the damper 51 with power generating function includes the rotor 35 which is disposed in the cylinder 110, coupled to the rod 450 rotatable around the central axis of the cylinder 110, and rotates in the cylinder 110 together with the rod 450. Accordingly, when the rod 450 and the rotor 35 rotate around the central axis of the cylinder 110, the magnetic particles 90 filled in the cylinder 110 flow in the rotational direction of the rod 450 and the rotor 35. As the result, in the damper 51 with power generating function, damping force can be generated in the direction opposite to the rotational direction of the rod 450 and the rotor 35 and furthermore, induced electromotive force can be generated in the coil unit 320.

The present invention is not limited to the first to sixth embodiments described above and explained with reference to the description and the drawings. For example, the following embodiments are included in the technical field of the present invention.

(1) In the first, third, and fifth embodiments, the coil units are provided on the outer peripheral surface of the cylinder, in the piston, and in the rod, respectively. However, the coil units may be disposed on the outer peripheral surface of the cylinder, the rod, and the piston in parallel.

(2) In the first to sixth embodiments, the magnetic particles are elastic bodies made of silicone rubber which is elastomer having a hardness of 60. However, the magnetic particles may be made of other materials as long as the materials have magnetism, or these materials may be compositely used. Furthermore, the hardness of the magnetic particles may range from 40 to 90. Furthermore, a material which is not elastically deformed may also be used.

(3) In each of the first to sixth embodiments, the sizes of the plurality of magnetic particles filled in the cylinder are uniform. However, magnetic particles having different particle diameters may be filled in the cylinder.

(4) In each of the first to sixth embodiments, the magnetic particles contain neodymium (Nd) particles. However, the magnetic particles may contain other materials as long as the materials have magnetism. The magnetic particles may compositely contain these materials.

(5) In each of the first to sixth embodiments, the rod projects from both opening ends of the cylinder to the outside of the cylinder. However, the rod may project from one side of the piston (rotor) and project from one of the opening ends of the cylinder to the outside of the cylinder.

(6) In each of the first to fifth embodiments, one cylindrical coil unit is provided. However, a plurality of coil units may be provided.

(7) In the sixth embodiment, ridges are formed between two adjacent surfaces of the four surfaces forming the square shape. However, the ridges are not limited to strict corners, and the ridges may be chamfered or may be formed by curved surfaces so that the two surfaces are continued.

[Reference Numerals]

10, 110 ... cylinder (case)
20, 120, 220, 320 ... coil unit
30, 130, 230 ... piston
35 ... rotor
40, 140 ... magnet (permanent magnet)
50, 150, 250, 350, 450, 550 ... rod
90 ... magnetic particles

**Claims**

1.  A damper with power generating function comprising:

    a case (10, 110); and
    a rod (50, 150, 250, 350, 450, 550) projecting outside from the case (10, 110) and reciprocally movable in an axial direction or rotatable around an axis, **characterized by**:

    a plurality of magnetic particles (90) filled in the case (10, 110) and having characteristics of a permanent magnet; and
    a coil unit (20, 120, 220, 320), wherein directions of magnetic lines formed by the plurality of magnetic particles (90) are changed with reciprocal movement or axial rotation of the rod (50, 150, 250, 350, 450, and 550) so that a number of the magnetic lines penetrating the coil unit (20, 120, 220, 320) is changed, whereby induced electromotive force is generated in the coil unit (20, 120, 220, 320).

2.  The damper with power generating function according to claim 1, wherein the magnetic particles (90) have elasticity.

3.  The damper with power generating function according to claim 1 or 2, wherein the coil unit (120, 220) is disposed in the rod (150, 350).

4.  The damper with power generating function according to claim 1 or 2, wherein a permanent magnet (140) is disposed in the rod (250), and the coil unit (20) is disposed at the case (10).

5.  The damper with power generating function according to any one of claims 1 to 4, comprising a piston (30, 130, 230) which is disposed in the case (10), coupled to the rod (50, 150), and reciprocally moves together with the rod (50, 150).

6.  The damper with power generating function according to claim 5, wherein a permanent magnet (40) is disposed in the piston (130), and the coil unit (20) is disposed at the case (10).

7.  The damper with power generating function according to claim 5, wherein the coil unit (120) is disposed in the piston (230).

8.  The damper with power generating function according to any one of claims 1 to 4, comprising a rotor (35) which is disposed in the case (110), coupled to the rod (450) rotatable around the axis, and rotates in the case (110) together with the rod (450).

# Fig. 1

EP 3 428 474 A1

# Fig. 2

Fig.3A

First cycle

Fig.3B

Tenth cycle

Fig.4A

First cycle

Fig.4B

Tenth cycle

Fig.5A

Fig.5B

# Fig. 6

# Fig. 7

# Fig. 8

# Fig. 9

**Fig.10A**

**Fig.10B**

Fig.11A

Fig.11B

Europäisches
Patentamt

European
Patent Office

Office européen
des brevets

## EUROPEAN SEARCH REPORT

Application Number

EP 17 00 1189

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/313575 A1 (STANSBURY III JAMES A [US]) 13 December 2012 (2012-12-13) * paragraph [0079] - paragraph [0080] * ----- | 1,5,8 | INV. F16F7/01 ADD. F16F9/46 |
| A | JP 2011 021648 A (NAGOYA INST TECHNOLOGY) 3 February 2011 (2011-02-03) * paragraphs [0014], [0021], [0022]; figures 1, 3 * ----- | 1,5 | |
| A | JP 2015 028365 A (NAGOYA INST TECHNOLOGY) 12 February 2015 (2015-02-12) * paragraphs [0011], [0015], [0016]; figure 4 * ----- | 1,5 | |
| A | JP 2015 222098 A (NAGOYA INST TECHNOLOGY) 10 December 2015 (2015-12-10) * paragraph [0011] - paragraph [0012]; figures 1-3 * ----- | 1,5 | |
| A | DE 10 2013 017756 B3 (CVT INDUSTRIEBEDARF GMBH [DE]) 5 March 2015 (2015-03-05) * paragraph [0034]; figures 1, 2 * ----- | 1 | TECHNICAL FIELDS SEARCHED (IPC) F16F B60G |

The present search report has been drawn up for all claims

| Place of search | Date of completion of the search | Examiner |
|---|---|---|
| The Hague | 5 January 2018 | Sommer, Jean |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 17 00 1189

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2018

| Patent document cited in search report | Publication date | Patent family member(s) | Publication date |
|---|---|---|---|
| US 2012313575 A1 | 13-12-2012 | US 2012313575 A1<br>US 2014353060 A1 | 13-12-2012<br>04-12-2014 |
| JP 2011021648 A | 03-02-2011 | NONE | |
| JP 2015028365 A | 12-02-2015 | NONE | |
| JP 2015222098 A | 10-12-2015 | NONE | |
| DE 102013017756 B3 | 05-03-2015 | NONE | |

EPO FORM P0459

For more details about this annex : see Official Journal of the European Patent Office, No. 12/82